# EUROPEAN PATENT APPLICATION

(11) **EP 4 516 970 A1**
(43) Date of publication of application: **05.03.2025**
(21) Application number: 23796564.5
(22) Date of filing: 28.04.2023
(51) Int. Cl.: C25D 5/16, C23C 10/30, C25D 3/12, C25D 5/14, C25D 5/38, C25D 5/50, H01M 4/66

(54) **NICKEL-PLATED STEEL SHEET AND METHOD FOR PRODUCING SAME**

(30) Priority: 29.04.2022 JP 2022075593
(71) Applicant: Toyo Kohan Co., Ltd., Tokyo 141-8260 (JP)
(72) Inventor: OSHIMA, Yuto, Kudamatsu-shi, Yamaguchi 744-8611 (JP); YOSHIOKA, Koh, Kudamatsu-shi, Yamaguchi 744-8611 (JP)
(74) Representative: Hoffmann Eitle
(86) International application number: PCT/JP2023/016990
(87) International publication number: WO 2023/210832

(57) **Abstract**

[Object]

To provide a nickel-plated steel sheet where both the adhesiveness of a plated layer to a substrate and the adhesiveness of the plated layer to another member are ensured and that has a reduced total thickness including a roughened layer.

[Solving Means]

A nickel-plated steel sheet having a substrate made of a steel sheet, a roughened nickel layer provided on the substrate, and an iron-nickel alloy layer provided between the substrate and the roughened nickel layer.

## Description

### [Technical Field]

The present invention relates to a nickel-plated steel sheet and a method for producing the same.

### [Background Art]

In recent years, there has been known a technology for forming a plated layer on such a substrate as a metal sheet or a metal foil, for example, in which, instead of making the plated layer smooth, what is generally called a roughened layer is formed by forming surface irregularities on a plated surface or depositing metal particles or metal spikes on the substrate.

For example, PTL 1 discloses a roughened nickel-plated sheet in which a plated layer maintains its adhesiveness to a substrate and, at the same time, has excellent adhesiveness to another member. PTL 2 reveals a roughened nickel-plated sheet in which, in addition to the adhesiveness of a plated layer to a substrate and the adhesiveness of the plated layer to another member, the plated layer has increased liquid permeability resistance in a case where it is joined to the other member.

### [Citation List]

### [Patent Literature]

[PTL 1]
   PCT Patent Publication No. WO2020/017655
[PTL 2]
   PCT Patent Publication No. WO2021/149821

### [Summary]

### [Technical Problems]

With the roughened nickel steel sheets disclosed in the patent literature referred to above, in order to secure the adhesiveness of the roughened nickel layer to the substrate, a foundation nickel layer is formed in at least a predetermined amount of deposited nickel on a steel sheet as the substrate, and then, roughening nickel plating is performed on the foundation nickel layer. As a result of a review conducted by the inventors, it has been found that, with use of a particular metal species for the surface on which roughening nickel plating is performed, the adhesiveness of the roughened nickel layer to the substrate can be made satisfactory even if the thickness of the foundation nickel layer is of a predetermined value or smaller, making it possible to attempt to simplify steps of roughening nickel plating and increase the fabrication speed.

The present invention has been made with a view to solving the above problems. It is an object of the present invention to provide a roughened nickel-plated steel sheet in which the adhesiveness of a plated layer to a substrate and the adhesiveness of the plated layer to another member are ensured and which has excellent rupture resistance (the adhesiveness of the substrate and a roughened nickel layer at the time when a load is imposed).

### [Solution to Problems]

In order to solve the above problems, a nickel-plated steel sheet according to the present embodiment includes (1) a substrate made of a steel sheet, a roughened nickel layer provided on the substrate, and an iron-nickel alloy layer provided between the substrate and the roughened nickel layer.

In (1) described above, preferably, (2) an arithmetic mean height Sa as a three-dimensional surface property parameter of a surface of the roughened nickel layer is in a range of 0.2 to 1.3 µm, and a lightness L* thereof is in a range of 30 to 50.

In (1) or (2) described above, preferably, the nickel-plated steel sheet further includes (3) a nickel layer provided between the roughened nickel layer and the iron-nickel alloy layer.

In (3) described above, preferably, (4) a deposited amount of nickel in the nickel layer is in a range of 0.08 to 8.90 g/m².

In (3) described above, preferably, (5) a total of deposited amounts of nickel in the iron-nickel alloy layer and the nickel layer is in a range of 0.89 to 26.7 g/m².

In (3) described above, preferably, (6) a total of deposited amounts of nickel in the roughened nickel layer, the iron-nickel alloy layer, and the nickel layer is in a range of 4.0 to 88.2 g/m².

In (3) described above, preferably, (7) a peak material volume of the scale-limited surface Vmp as a three-dimensional surface property parameter of a surface of the roughened nickel layer is 0.09 µm³/µm² or less.

A method of manufacturing a nickel-plated steel sheet according to the present embodiment includes (8) an iron-nickel alloy layer forming step of forming an iron-nickel alloy layer on a substrate made of a steel sheet, and a roughened nickel plating step of forming a roughened nickel layer on the formed iron-nickel alloy layer by performing roughened nickel plating thereon.

In (8) described above, preferably, (9) the iron-nickel alloy layer forming step includes a nickel layer forming step of forming a nickel layer on the substrate made of the steel sheet, by performing nickel plating thereon, and a heat treatment step of performing heat treatment on the substrate with the nickel layer formed thereon.

In (8) or (9) described above, preferably, the method further includes, (10) before the roughened nickel plating step, a foundation nickel depositing step of depositing foundation nickel in an amount ranging from 0.08 to 8.90 g/m² by performing nickel strike plating and nickel plating.

In (8) or (9) described above, preferably, (11) a proportion of iron in a surface to be roughened prior to the roughened nickel plating step is in a range of 0% to 65%.

### [Advantageous Effect of Invention]

According to the present invention, there is provided a nickel-plated steel sheet in which the adhesiveness of a plated layer to a substrate and the adhesiveness of the plated layer to another member are ensured and which has a reduced total thickness.

### [Brief Description of Drawing]

[FIG. 1]

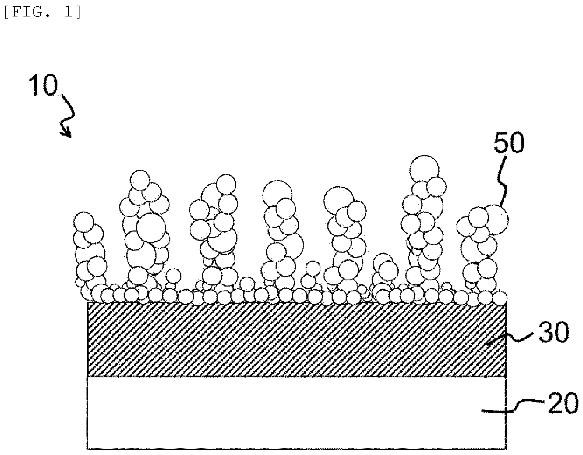

   FIG. 1 is a view schematically illustrating a nickel-plated steel sheet according to an embodiment of the present invention.
[FIG. 2]

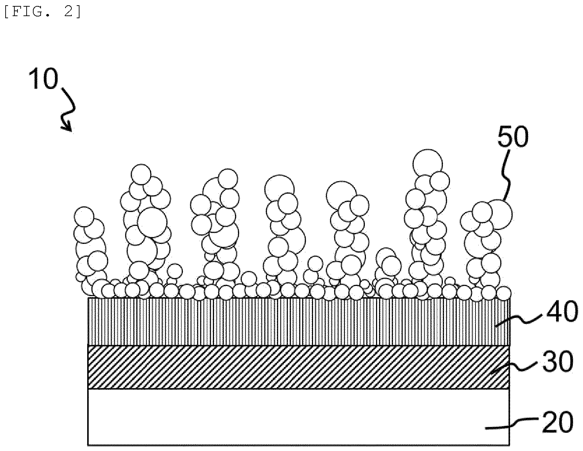

   FIG. 2 is a view schematically illustrating a nickel-plated steel sheet according to another embodiment of the present invention.
[FIG. 3]

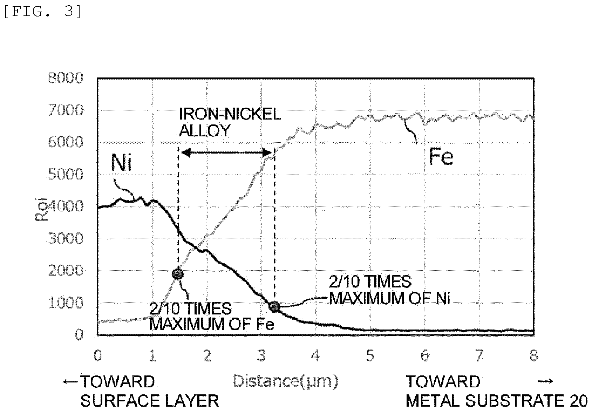

   FIG. 3 is a schematic diagram that represents a process of determining the thickness of an iron-nickel alloy layer contained in an iron-nickel alloy foil according to the present embodiments.
[FIG. 4]

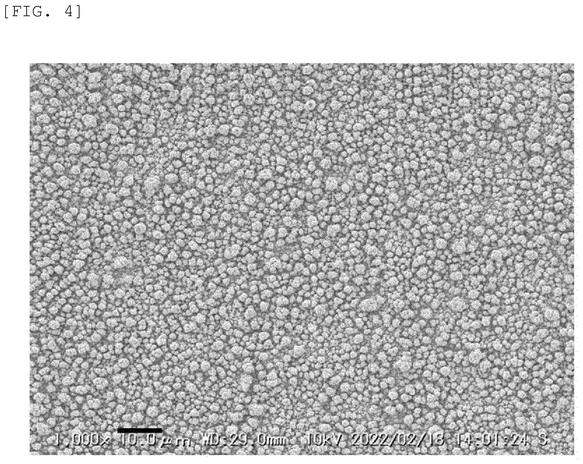

   FIG. 4 is a scanning electron microscope (SEM) photographic representation of the surface state of a nickel-plated steel sheet according to an inventive example of the present invention.
[FIG. 5]

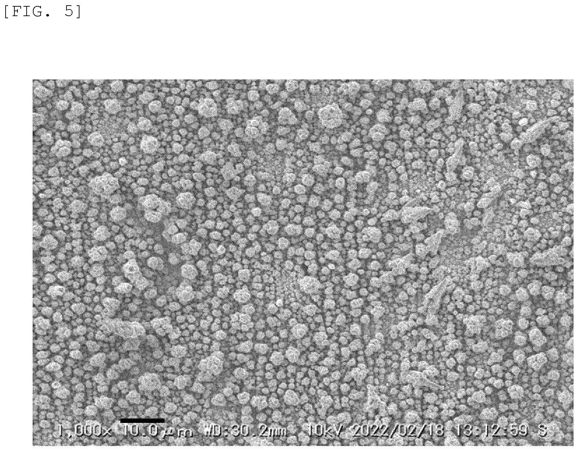

   FIG. 5 is an SEM photographic representation of the surface state of a nickel-plated steel sheet according to a comparative example of the present invention.

### [Description of Embodiments]

### <<Nickel-plated steel sheet>>

Embodiments that produce nickel-plated steel sheets according to the present invention to practice will be described hereinbelow.

### <First embodiment>

FIG. 1 is a view schematically illustrating a nickel-plated steel sheet 10 according to an embodiment of the present invention. Note that the nickel-plated steel sheet 10 according to the present embodiment is applicable to a current collector of a positive pole or a negative pole of a secondary battery and an electronic device, for example.

The nickel-plated steel sheet 10 according to the present embodiment includes a substrate 20 made of a steel sheet, an iron-nickel alloy layer 30, and a roughened nickel layer 50 provided on the iron-nickel alloy layer.

### <Substrate 20>

The steel sheet of the substrate 20 used in the nickel-plated steel sheet 10 according to the present embodiment should preferably be a steel sheet made of iron with Cr and other metal elements added in less than 1.0 wt%. Specifically, low-carbon steel (0.01 to 0.15 wt% of carbon content) typified by low-carbon aluminum-killed steel, ultra low carbon steel whose carbon content is less than 0.01 wt%, or non-aging ultra low carbon steel where Ti or Nb is added to ultra low carbon steel should preferably be used.

The substrate 20 used in the nickel-plated steel sheet 10 according to the present embodiment should preferably have a thickness in the range of 0.01 to 0.5 mm. If the nickel-plated steel sheet 10 is used as a current collector of a battery with emphasis on volume and weight energy densities, then the thickness of the substrate 20 should more preferably be in the range of 0.01 to 0.3 mm or much more preferably be in the range of 0.025 to 0.1 mm from the standpoints of mechanical strength and desirable battery capacity, for example. The thickness of the substrate 20 should desirably be measured according to a cross-sectional observation by an optical microscope or an SEM. Prior to the surface treatment, **i.e.,** prior to nickel plating or prior to iron-nickel alloy plating, a thickness measurement process using a micrometer is applicable, for example.

### <Iron-nickel alloy layer 30>

The iron-nickel alloy layer 30 included in the nickel-plated steel sheet 10 according to the present embodiment is an alloy layer containing iron (Fe) and nickel (Ni), i.e., a metal layer containing an alloy of iron and nickel (also referred to as an "iron-nickel alloy" or a "Fe-Ni alloy"). Note that the alloy of iron and nickel may be in a state of either solid solution, eutectoid/eutectic, or compound (intermetallic compound) or in a coexistence of those states.

The iron-nickel alloy layer 30 included in the nickel-plated steel sheet 10 according to the present embodiment may contain other metal elements and inevitable impurities as long as they are conducive to solving the problems of the present invention. For example, the iron-nickel alloy layer 30 may contain metal elements such as cobalt (Co) and molybdenum (Mo) and additive elements such as boron (B). The proportion of metal elements other than iron (Fe) and nickel (Ni) in the iron-nickel alloy layer 30 should preferably be 5 wt% or less, more preferably be 3 wt% or less, or much more preferably be 1 wt% or less. Since the iron-nickel alloy layer 30 may be a binary alloy essentially made of iron and nickel, the lower limit for the proportion of other metal elements except inevitable impurities is 0%.

The kinds and amounts of other metal elements contained in the iron-nickel alloy layer 30 can be measured by known means such as an X-ray fluorescence (XRF) measuring device or glow discharge optical emission spectroscopy (GDS).

Next, the thickness of the iron-nickel alloy layer 30 will be described below. The thickness of the iron-nickel alloy layer 30 included in the nickel-plated steel sheet 10 according to the present embodiment should preferably be 0.4 µm or more, more preferably be 0.6 µm or more, or much more preferably be 0.7 µm or more. Although there is no upper limit for the thickness of the iron-nickel alloy layer 30, since, if the iron-nickel alloy layer 30 is too thick, the proportion of a hard layer included in the nickel-plated steel sheet 10 is so large that the nickel-plated steel sheet 10 itself is possibly liable to crack and presents higher resistance, the thickness of the iron-nickel alloy layer 30 per one side should preferably be 7.5 µm or less or more preferably be 6 µm or less. In particular, in a case where a continuous steel sheet is used as the substrate 20, i.e., in a case where a surface treatment is performed on a continuous steel sheet to obtain the nickel-plated steel sheet having the iron-nickel alloy layer according to the present embodiment, the thickness of the iron-nickel alloy layer 30 should preferably be 6 µm or less or more preferably be 3.5 µm or less from the standpoints of controlling the deposited amounts of plated metal and avoiding irregularities in the heat treatment.

A process of calculating the thickness of the iron-nickel alloy layer 30 according to the present embodiment will be described below. As the process of calculating the thickness of the iron-nickel alloy layer 30 according to the present embodiment, there can be performed a quantitative analysis of nickel and iron at the depth of at least 10 µm thicknesswise from the surface layer by way of an SEM-energy-dispersive X-ray spectroscopy (EDX) analysis on a cross section of the nickel-plated steel sheet 10. If the thickness of the iron-nickel alloy layer is in excess of 10 µm, then a quantitative analysis is carried out down to the required depth.

An example of process of obtaining the thickness of the iron-nickel alloy layer 30 from a graph attained by SEM-EDX will be illustrated. In a graph of FIG. 3, the horizontal axis represents the distance (µm) depthwise from the surface layer, and the vertical axis represents X-ray intensities of Ni and Fe. The graph of FIG. 3 indicates that the nickel content is large and the iron content is small in a shallow region along a thicknesswise direction. Meanwhile, the iron content increases as the distance becomes larger thicknesswise.

Around the point where the nickel curve and the iron curve cross each other, according to the present embodiment, the thickness of the iron-nickel alloy layer 30 can be read from the graph as represented by the distance between points where the X-ray intensity of nickel is 2/10 of its maximum value and the X-ray intensity of iron is 2/10 of its maximum value, respectively.

Incidentally, it is possible to obtain the thickness of the iron-nickel alloy layer 30 according to the above process even in a case where a nickel layer 40, to be described later, is formed on the iron-nickel alloy layer 30.

Note that the reasons why the thickness of the iron-nickel alloy layer 30 is represented by the distance between points where the X-ray intensity of nickel is 2/10 of its maximum value and the X-ray intensity of iron is 2/10 of its maximum value, respectively, according to the present embodiment are as follows.

According to the present invention, it is preferable to set the thickness of the iron-nickel alloy layer 30 to a predetermined value or larger. In a case where the thickness of the iron-nickel alloy layer 30 was measured by SEM-EDX, it was found that the iron intensity at a position where the nickel intensity was at its peak level was detected as a numerical value that was approximately 10% to 20% of the nickel intensity even in a sample that was not heat-treated, i.e., a sample where no iron was diffused in nickel. After the nickel intensity was reduced, i.e., upon measurement of the substrate 20, the nickel intensity was continuously detected as a numerical value that was approximately 3% to 8% of the maximum nickel intensity. The nickel intensity at this time was approximately 2% of the iron intensity, and did not decrease below 1% even when it was continuously measured over 2 µm or more after it was reduced. In other words, it was discovered in the SEM-EDX measurement that the nickel intensity and the iron intensity were affected by each other in a range of trace amounts. In the present description, therefore, the range in which the intensities of 2/10 or more of the maximum intensities are detected is defined as the thickness of the alloy layer where iron and nickel are alloyed more reliably.

In FIG. 1, the iron-nickel alloy layer 30 is provided on one side of the substrate 20. The present invention is not limited such a detail, and the iron-nickel alloy layer 30 may be provided on both sides of the substrate 20, though not depicted. Further, in a case where the iron-nickel alloy layer 30 are provided on both sides of the substrate 20, the thickness of the iron-nickel alloy layer 30 on one side may be the same as or different from the thickness of the iron-nickel alloy layer 30 on the other side.

The iron-nickel alloy layer 30 should preferably be formed by plating or plating and heat treatment. Plating may be electroplating, electroless plating, hot-dip plating, or dry plating, for example. Of these plating processes, in particular, electroplating is preferable from the standpoints of cost and layer thickness control, for example.

For example, there may be listed a process of forming an Ni-plated layer on at least one side of the substrate 20 by way of electroplating, for example, and then diffusion iron (Fe) and nickel (Ni) in the substrate 20 by way of diffusion treatment by heating, for example, to alloy them and a process of forming an alloy layer by way of iron-nickel alloy plating. These fabrication processes will be described later.

### <Roughened nickel layer 50>

The roughened nickel layer 50 may be formed on the outermost surface of one side of the nickel-plated steel sheet 10, as illustrated in FIG. 1, or may be formed on both sides thereof, though not depicted. Note that it is preferable from the standpoint of increasing the adhesiveness of the roughened nickel layer to another member to have an arithmetic mean height Sa as a three-dimensional surface property parameter of the roughened nickel layer in the range of 0.2 to 1.3 µm and a lightness L* in the range of 30 to 50. Moreover, it is preferable from the standpoint of further increasing the adhesiveness of the roughened nickel layer to another member to have the arithmetic mean height Sa in the range of 0.4 to 1.3 µm. The lightness L* of the roughened nickel layer 50 according to the present embodiment can be measured using a spectral colorimeter by the specular component excluded (SCE) process according to JIS Z8722. Moreover, a maximum height Sz as a three-dimensional surface property parameter of the roughened nickel layer 50 should preferably be in the range of 3 to 20 µm, and a 85° glossiness should preferably be in the range of 1.5 to 60, from the standpoint of increasing the adhesiveness to another member. From the standpoint of further increasing the adhesiveness to another member, the maximum height Sz should more preferably be 4 µm or more and much more preferably be 7 µm or more. From the standpoint of increasing the rupture resistance, the maximum height Sz should more preferably be 18 µm or less. Further, from the standpoint of further increasing the adhesiveness to another member, the 85° glossiness should more preferably be in the range of 1.5 to 55 and much more preferably be in the range of 1.5 to 50. The 85° glossiness of the surface of the roughened nickel layer 50 can be determined by measuring a 85° specular gloss using a glossmeter according to JIS Z8741. Moreover, a peak material volume of the scale-limited surface Vmp as a three-dimensional surface property parameter of the roughened nickel layer 50 according to the present embodiment should preferably be 0.09 µm³/µm² or less, more preferably be 0.08 µm³/µm² or less, or much more preferably be 0.07 µm³/µm² or less.

Protrusions of a roughened nickel layer formed by roughened nickel plating will be focused on. While a plurality of protrusions grow on average to some extent heightwise, i.e., thicknesswise of a roughened nickel steel foil, they do not necessarily reach the same height and size. Some of the protrusions may have their tip ends especially grown. The grown tip ends of those protrusions are likely to break under pressure. According to the present embodiment, it has been found that, since the steel sheet has the iron-nickel alloy layer prior to roughened nickel plating, it prevents the growth of the tip ends of the protrusions of the roughened nickel layer from being localized, i.e., prevents the roughened nickel layer from having excessive shape irregularities, thereby providing a roughened nickel steel sheet having excellent rupture resistance (the adhesiveness between the substrate and the roughened nickel layer under loads) at the time when the roughened nickel steel sheet will pass through the rolls of the processing line. By preventing only the tip ends of some protrusions from growing and by keeping the peak material volume of the scale-limited surface Vmp is 0.09 µm³/µm²,or less, the roughened nickel steel sheet has shape irregularities prevented from happening and has excellent rupture resistance. Though no particular lower limit is established for the peak material volume of the scale-limited surface Vmp, Vmp should preferably be 0.005 µm³/µm² or more or more preferably be 0.01 µm³/µm² or more from the standpoints of maintaining a better roughened configuration and keeping the adhesiveness to another member.

The term "roughened nickel layer 50" in the present description may cover a coating nickel layer. Details of the foundation nickel layer, the roughened nickel layer, and the coating nickel layer will be described later.

In the nickel-plated steel sheet 10 according to the present embodiment, the deposited amount of nickel in the iron-nickel alloy layer 30 should preferably be in the range of 0.89 to 26.7 g/m² or more preferably be in the range of 1.3 to 17.8 g/m². Incidentally, the deposited amount of nickel in the iron-nickel alloy layer 30 can be measured by an XRF analysis, for example.

The total of the deposited amounts of nickel in the iron-nickel alloy layer 30 and the roughened nickel layer 50 should preferably be in the range of 4.0 to 79.3 g/m². From the standpoints of increasing the adhesiveness of the plated layer to the substrate and also increasing the adhesiveness of the plated layer to another member, the total of the deposited amounts of nickel in the iron-nickel alloy layer 30 and the roughened nickel layer 50 should preferably be 5.0 g/m² or more, more preferably be 7.7 g/m² or more, or particularly preferably be 9.0 g/m² or more. From the standpoint of reducing the overall thickness of the nickel-plated steel sheet 10, the total of the deposited amounts of nickel in the iron-nickel alloy layer 30 and the roughened nickel layer 50 should preferably be 60 g/m² or less or more preferably be 50 g/m² or less.

According to the present embodiment, the deposited amount of nickel may appropriately be measured by the processes disclosed in PCT Patent Publication No. WO2020/017655 and PCT Patent Publication No. WO2021/020338, for example. In other words, the total amount of nickel in the nickel-plated steel sheet 10 can be determined by an XRF analysis, for example.

The overall thickness of the nickel-plated steel sheet 10 according to the present embodiment will be described below. Note that the measurement of a thickness according to a cross-sectional observation by an SEM or the measurement of a thickness using a micrometer is applicable to the "thickness of the nickel-plated steel sheet 10" according to the present embodiment.

The overall thickness of the nickel-plated steel sheet 10 according to the present embodiment should preferably be in the range of 0.02 to 0.51 mm. Further, from the standpoints of mechanical strength and desirable battery capacity, for example, the overall thickness of the nickel-plated steel sheet 10 according to the present embodiment should more preferably be in the range of 0.02 to 0.31 mm or much more preferably be in the range of 0.035 to 0.11 mm.

Thicknesses in excess of the upper limit of the above thickness range are not preferable from the standpoints of volume and weight energy densities of batteries to be manufactured, and are particularly not preferable if the batteries are to be thinner. In contrast, thicknesses smaller than the lower limit of the above thickness range not only make it difficult for the steel sheet to have a sufficient mechanical strength against adverse effects caused by charging and discharging the batteries, but also make it highly possible for the steel sheet to break, tear apart, and wrinkle, for example, when the batteries are manufactured and handled, for example.

As described above, the nickel-plated steel sheet 10 according to the present embodiment can be of a smaller overall thickness than heretofore as it is possible to form the roughened nickel layer 50 on the iron-nickel alloy layer 30 with no other metal layers formed thereon. It is also possible to provide a roughened nickel-plated steel sheet that is of excellent rupture resistance.

### <Second embodiment>

Next, a nickel-plated steel sheet 10 according to the present embodiment will be described below with reference to FIG. 2. As illustrated in FIG. 2, the nickel-plated steel sheet 10 according to the present embodiment is different from that according to the first embodiment in that the nickel-plated steel sheet 10 according to the present embodiment includes a nickel layer 40 formed between the iron-nickel alloy layer 30 and the roughened nickel layer 50. Therefore, the difference will mainly be described below with other details denoted by identical reference signs and omitted from description.

### <Nickel layer 40>

As described above, the nickel layer 40 is provided between the iron-nickel alloy layer 30 and the roughened nickel layer 50. The nickel layer 40 is made of a metal material such as nickel or a nickel alloy, for example.

The nickel layer 40 according to the present embodiment may be formed as a nickel layer on the iron-nickel alloy layer 30 by not diffusing iron up to the surface when the iron-nickel alloy layer 30 is formed by depositing nickel by way of electroplating and thereafter performing heat treatment. In addition, nickel may further be plated on the nickel layer 40.

Advantages produced by forming the nickel layer 40 on the iron-nickel alloy layer 30 in the nickel-plated steel sheet 10 according to the present embodiment are as follows. The nickel layer 40 formed in addition to the iron-nickel alloy layer 30 maintains the adhesiveness of the roughened nickel layer 50 to the iron-nickel alloy layer 30 and reduces the overall thickness of the nickel-plated steel sheet 10.

According to the present embodiment, the total deposited amount of nickel in the nickel layer 40 should preferably be in the range of 0.08 to 8.9 g/m² from the standpoints of maintaining the adhesiveness of the plated layer to the substrate and the adhesiveness of the plated layer to another member, for example, and reducing the overall thickness of the nickel-plated steel sheet 10. More preferably, the total deposited amount of nickel in the nickel layer 40 should be in the range of 0.08 to 7.12 g/m². From the standpoint of rupture resistance, the total deposited amount of nickel in the nickel layer 40 should preferably be 1.1 g/m² or more or more preferably be 1.33 g/m² or more. From the standpoint of reducing the overall thickness of the nickel-plated steel sheet 10, the total deposited amount of nickel in the nickel layer 40 should preferably be 6.5 g/m² or less. The deposited amount of nickel in the nickel layer 40 can be measured by an XRF analysis, for example.

Note that the thickness of the nickel layer 40 should preferably be in the range of 0.1 to 1.0 µm or more preferably be in the range of 0.1 to 0.8 µm from the standpoints of maintaining the adhesiveness of the plated layer to the substrate and the adhesiveness of the plated layer to another member, for example, and reducing the overall thickness of the nickel-plated steel sheet 10. Further, from the standpoint of rupture resistance, the thickness of the nickel layer 40 should preferably be 0.12 µm or more or more preferably be 0.15 µm or more in particular. From the standpoint of reducing the overall thickness of the nickel-plated steel sheet 10, the thickness of the nickel layer 40 should preferably be 0.73 µm or less.

Further, from the standpoints of maintaining the adhesiveness of the plated layer to the substrate and the adhesiveness of the plated layer to another member, for example, and reducing the overall thickness of the nickel-plated steel sheet 10, the ratio of the thickness of the iron-nickel alloy layer 30 to the thickness of the nickel layer 40 in the nickel-plated steel sheet 10 should preferably be in the range of the iron-nickel alloy layer 30:the nickel layer 40 = 3:10 to 60:1, or more preferably be in the range of the iron-nickel alloy layer 30:the nickel layer 40 = 3:10 to 35:1, or much more preferably be in the range of the iron-nickel alloy layer 30:the nickel layer 40 = 1:1 to 30:1.

The measurement of a thickness by an SEM-EDX analysis on a cross section of the nickel-plated steel sheet is applicable to the measurement of the thickness of the nickel layer 40 as is the case with the iron-nickel alloy layer 30.

According to the present embodiment, the total of the deposited amounts of nickel in the iron-nickel alloy layer 30, the nickel layer 40, and the roughened nickel layer 50 should preferably be in the range of 4.0 to 88.2 g/m². From the standpoints of increasing rupture resistance and the adhesiveness to another member, the total of the deposited amounts of nickel in the iron-nickel alloy layer 30, the nickel layer 40, and the roughened nickel layer 50 should preferably be 5.5 g/m² or more, more preferably be 7.78 g/m² or more, or particularly preferably be 9.08 g/m² or more. From the standpoint of reducing the overall thickness of the nickel-plated steel sheet 10, the total of the deposited amounts of nickel in the iron-nickel alloy layer 30, the nickel layer 40, and the roughened nickel layer 50 should preferably be 78.9 g/m² or less, more preferably be 68.9 g/m² or less, or much more preferably be 37.0 g/m² or less.

According to the present embodiment, the deposited amount of nickel can be measured by an XRF analysis, for example, as with the first embodiment.

### <<Method of manufacturing a nickel-plated steel sheet>>

A method of manufacturing the nickel-plated steel sheet 10 will be described below. The method of manufacturing the nickel-plated steel sheet 10 according to the present embodiment includes an iron-nickel alloy layer forming step of forming the iron-nickel alloy layer 30 on at least one side of the substrate 20 and a roughened nickel plating step of forming a roughened nickel layer on the formed iron-nickel alloy layer 30 by performing roughened nickel plating thereon.

The iron-nickel alloy layer forming step may form a nickel-plated layer by way of electroplating on at least one side of a steel sheet as the substrate 20 and thereafter perform heat treatment to form the iron-nickel alloy layer 30 by diffusion treatment by heating.

The iron-nickel alloy layer forming step may alternatively form the iron-nickel alloy layer 30 by performing alloy electroplating on at least one side of a steel sheet as the substrate 20 with use of an alloy plating bath including iron ions and nickel ions.

Specifically, the iron-nickel alloy layer forming step may include (i-1) a step of forming a nickel-plated layer on at least one side of a steel foil and (i-2) a step of forming the iron-nickel alloy layer 30 by diffusion treatment by heating on the nickel-plated layer on the steel foil.

Alternatively, the iron-nickel alloy layer forming step may include (ii) a step of forming the iron-nickel alloy layer 30 by using a plating bath including iron ions and nickel ions on at least one side of a steel foil.

In the manufacturing method according to the present embodiment, known conditions may be applied as plating conditions for forming a nickel-plated layer by way of electroplating and forming an iron-nickel-alloy-plated layer, for example. Examples of plating conditions are illustrated below.

### [Example of a nickel plating bath (Watts bath) and plating conditions]

- Bath composition:
   Nickel sulfate hexahydrate: 200 to 300 g/L
   Nickel chloride hexahydrate: 20 to 60 g/L
   Boric acid: 10 to 50 g/L
   Bath temperature: 40°C to 70°C
   pH: 3.0 to 5.0
   Stirring: air stirring or jet stirring
   Current density: 5 to 30 A/dm²

Note that, with regard to the bath composition, a known nickel sulfamate bath or a citric acid bath may be used instead of the Watts bath. Moreover, an additive such as a known brightener may be added to the plating bath to perform glossy plating or semi-glossy plating.

### [Example of an iron-nickel alloy plating bath and plating conditions]

- Bath composition:
   Nickel sulfate hexahydrate: 150 to 250 g/L
   Ferrous sulfate heptahydrate: 5 to 100 g/L
   Nickel chloride hexahydrate: 20 to 50 g/L
   Boric acid: 20 to 50 g/L
   Sodium citrate (or trisodium citrate): 1 to 15 g/L
   Sodium saccharin: 1 to 10 g/L
   Temperature: 25°C to 70°C
   pH: 2 to 4
   Stirring: air stirring or jet stirring
   Current density: 5 to 40 A/dm²

In the manufacturing method according to the present embodiment, the deposited amount of nickel in the nickel-plated layer or the iron-nickel-alloy-plated layer formed on the steel sheet per one side should preferably be in the range of 1.3 to 53.4 g/m². If the deposited amount is in excess of 53.4 g/m², then the cost increases greatly because the runnability of electroplating is lowered. On the other hand, if the deposited amount is smaller than 1.3 g/m², then it is not preferable because there is a possibility that shape irregularities are likely to occur. From the standpoints of cost and electrolyte resistance, the deposited amount of nickel on the steel foil per one side after alloy plating or heat treatment to be described later should preferably be in the range of 1.3 to 26.7 g/m². The total deposited amount on both sides of the steel foil should preferably be in the range of 2.6 to 53.5 g/m².

Next, conditions for the heat treatment in the step (i-2) described above will be described below. The conditions for the heat treatment step according to the present embodiment may be conditions to be described below. Note that the heat treatment according to the present embodiment may be continuous annealing or batch annealing (box-type annealing). Further, heat treatment performed after iron-nickel alloy plating instead of nickel plating may be performed under the same conditions.

According to an example of temperatures and times for a continuous annealing process, the continuous annealing process should preferably be performed in a temperature range of 650°C to 950°C for a soaking time range of 15 to 150 seconds. Lower temperatures and shorter times than the above heat treatment range are not preferable because they possibly fail to obtain the sufficient iron-nickel alloy layer 30. On the other hand, higher temperatures and longer times than the above heat treatment range are not preferable either because they possibly tend to produce shape irregularities or from the standpoint of cost.

According to an example of temperatures and times for a batch annealing (box-type annealing) process, the batch annealing (box-type annealing) process should preferably be performed in a temperature range of 450°C to 690°C for a soaking time range of 1.5 to 20 hours, and the total time including temperature increasing, soaking, and cooling times should preferably be in the range of 4 to 80 hours. Lower temperatures and shorter times than the above heat treatment range are not preferable because they possibly fail to obtain the sufficient iron-nickel alloy layer 30. On the other hand, higher temperatures and longer times than the above heat treatment range are not preferable either because they possibly tend to produce shape irregularities or from the standpoint of cost.

Note that, according to the present embodiment, a rolling process may be performed after the above heat treatment. The rolling ratio should preferably be in the range of 0% to 75%. If the rolling process is performed at a rolling ratio ranging from 35% to 75%, then it is preferable to perform secondary heat treatment.

Note that, in a case where the roughened nickel layer 50 is to be formed on the iron-nickel alloy layer 30 or the nickel layer 40 is to be formed on the iron-nickel alloy layer 30 in the method of manufacturing the nickel-plated steel sheet 10 according to the present embodiment, the roughened nickel layer 50 or the nickel layer 40 can be formed using a known nickel bath such as a Watts bath, a nickel sulfamate bath, or a citric acid bath, for example. In this case, it is preferable to perform a known nickel strike plating process immediately before the nickel layer 40 is formed. After the nickel layer 40 has been formed, it is preferable not to perform heat treatment from the standpoint of the adhesiveness to the roughened nickel layer to be described below.

The roughened nickel plating step will be described below. Note that the proportion of iron in at least the outermost surface to be roughened (e.g., the surface of the iron-nickel alloy layer 30 or the surface of the nickel layer 40) prior to roughened nickel plating should preferably be in the range of 0% to 65% from the standpoints of the adhesiveness of the roughened nickel layer 50 to the substrate and rupture resistance. Incidentally, the proportion of iron in the surface to be roughened can be measured by GDS.

In a plating bath for forming the roughened nickel layer 50, the concentration of chloride ions should preferably be in the range of 3 to 90 g/L, more preferably be in the range of 3 to 75 g/L, or much more preferably be in the range of 3 to 50 g/L, the ratio of nickel ions to ammonium ions in terms of the weight ratio of "nickel ions/ammonium ions" should preferably be in the range of 0.05 to 0.75, more preferably be in the range of 0.05 to 0.60, much more preferably be in the range of 0.05 to 0.50, or far more preferably be in the range of 0.05 to 0.30. Further, the electric conductivity of the bath at 50°C should preferably be in the range of 5.00 to 30.00 S/m, more preferably be in the range of 5.00 to 20.00 S/m, and much more preferably be in the range of 7.00 to 20.00 S/m. Note that, in a case where the concentration of chloride ions is 10 g/L or more, a good roughened plating state is likely to be achieved even if the deposited amount of nickel in roughened nickel plating is somewhat small. The concentration of chloride ions in the bath, the ratio of nickel ions to ammonium ions, and the electric conductivity of the bath may be adjusted to the above ranges by any processes though a process of providing a plating bath including nickel sulfate hexahydrate, nickel chloride hexahydrate, and ammonium sulfate and appropriately adjusting their amounts may be available.

An example of plating conditions is given below.

### [Roughened nickel plating conditions]

### Bath composition

Nickel sulfate hexahydrate 10 to 100 g/L, nickel chloride hexahydrate 1 to 90 g/L, ammonium sulfate 10 to 130 g/L
pH 4.0 to 8.0
Bath temperature 25°C to 70°C
Current density 4 to 40 A/dm²
Plating time 10 to 150 seconds
Stirring or not stirring: air stirring or jet stirring

Note that, instead of ammonium sulfate, ammonia water or ammonium chloride may be added to the nickel plating bath. The concentration of ammonia in the plating bath should preferably be in the range of 6 to 35 g/L, more preferably be in the range of 10 to 35 g/L, much more preferably be in the range of 16 to 35 g/L, or far more preferably be in the range of 20 to 35 g/L. Further, basic nickel carbonate compound, hydrochloric acid, sodium chloride, or potassium chloride may be used to control the concentration of chlorine ions.

Note that, as disclosed in PCT Patent Publication No. WO2020/017655, covering nickel plating may be performed to form a roughened nickel layer in a stage subsequent to the roughened nickel plating. Covering nickel plating conditions will be omitted from detailed description as the disclosure of PCT Patent Publication No. WO2020/017655 is applicable.

From the standpoint of the adhesiveness to another member, the deposited amount of nickel in the roughened nickel layer 50 formed in the above roughened nickel plating step should preferably be 3.11 g/m² or more or more preferably be 5.0 g/m² or more. From the standpoint of reducing the total thickness, the deposited amount of nickel in the roughened nickel layer 50 should preferably be 47.6 g/m² or less. From the standpoint of rupture resistance, the deposited amount of nickel in the roughened nickel layer 50 should preferably be 35.0 g/m² or less, more preferably be 25.0 g/m² or less, or much more preferably be 15.8 g/m² or less. Further, in a case where covering nickel plating is performed in a stage subsequent to the roughened nickel plating, from the standpoints of increasing the adhesiveness to another member and reducing the total thickness, the total of the deposited amounts of nickel in the roughened nickel layers formed by the roughened nickel plating and the covering nickel plating should preferably be in the range of 3.5 to 52.6 g/m². From the standpoint of further increasing the adhesiveness to another member, the lower limit for the total deposited amount of nickel in the roughened nickel layers should preferably be 5.0 g/m² or more. From the standpoint of rupture resistance, the upper limit for the total deposited amount of nickel in the roughened nickel layers should preferably be 35.0 g/m² or less, more preferably be 25.0 g/m² or less, or much more preferably be 22.0 g/m² or less.

An arithmetic mean height Sa as a three-dimensional surface property parameter of the roughened nickel layer 50 should preferably be in the range of 0.2 to 1.3 µm, and a lightness L* thereof should preferably be in the range of 30 to 50 from the standpoint of increasing the adhesiveness to another member. Moreover, it is preferable from the standpoint of further increasing the adhesiveness of the roughened nickel layer to another member to have the arithmetic mean height Sa in the range of 0.4 to 1.3 µm.

Further, a peak material volume of the scale-limited surface Vmp as a three-dimensional surface property parameter of the roughened nickel layer 50 should preferably be 0.09 µm³/µm² or less or more preferably be 0.08 µm³/µm² or less.

The 85° glossiness of the surface of the roughened nickel layer 50 should preferably be in the range of 1.5 to 60 from the standpoint of increasing the adhesiveness to another member, more preferably be in the range of 1.5 to 55, and much more preferably be in the range of 1.5 to 50.

Moreover, a maximum height Sz as a three-dimensional surface property parameter of the roughened nickel layer 50 should preferably be in the range of 3 to 20 µm or more preferably be in the range of 7 to 18 µm.

In order to obtain the roughened nickel layer 50, a roughened nickel layer is formed on the substrate with the iron-nickel alloy layer formed thereon, under the roughened nickel plating conditions described above.

### <<Inventive examples>>

The present invention will be described more specifically with reference to inventive examples. First, measuring processes in the inventive examples will be described below.

### [Process of measuring three-dimensional surface property parameters]

The arithmetic mean height Sa, the maximum height Sz, and the peak material volume of the scale-limited surface Vmp, which are three-dimensional surface property parameters of the surface of the roughened nickel layer 50, were measured according to ISO25178-2:2012 as follows. With use of a laser microscope (3D measurement laser microscope LEXT OLS5000 manufactured by Olympus Corporation) with an objective lens 50× magnification (lens name: MPLAPON50XLEXT), an analytic image of 256 µm × 256 µm was obtained. Next, with use of an analytic application, an automatic correcting process of noise removal and tilt correction was performed on the obtained analytic image. Thereafter, an icon for surface roughness measurement was clicked for performing an analysis, thereby obtaining three-dimensional surface property parameters (the arithmetic mean height Sa, the maximum height Sz, and the peak material volume of the scale-limited surface Vmp). Note that no filter conditions (F calculations, an S filter, and an L filter) were established in the analysis, and the analysis was performed with no filter conditions.

Shape irregularities were evaluated on the basis of the value of the peak material volume of the scale-limited surface Vmp.
A: 0.07 µm³/µm² or less
B: more than 0.07 µm³/µm² and 0.08 µm³/µm² or less
C: more than 0.08 µm³/µm² and 0.09 µm³/µm² or less
D: more than 0.09 µm³/µm² and 0.10 µm³/µm² or less
E: more than 0.10 µm³/µm²

Evaluation C or higher indicates a good result with respect to shape irregularities.

### [Process of measuring the adhesiveness between the substrate and the roughened nickel layer and evaluation]

A load of 10kN was applied to the surface of the nickel-plated steel sheet on which the roughened nickel layer was formed, by a press machine (20kN table press N3059-00 manufactured by NPa System Co., Ltd). Then, after an adhesive cellophane tape (a width of 100 mm × a length of 180 mm) was affixed as uniformly as possible to the portion of the steel sheet where the load had been applied, the adhesive cellophane tape was peeled off. The weight of roughened nickel layer fragments came off the area represented by the width of 100 mm × the length of 180 mm was determined by measuring the weight difference of the tape. Based on the weight of the roughened nickel layer fragments that came off, the adhesiveness between the substrate and the roughened nickel layer was evaluated as follows.
A: the weight difference was 1 mg or less.
B: the weight difference was more than 1 mg but 2 mg or less.
C: the weight difference was more than 2 mg but 10 mg or less.
D: the weight difference was more than 10 mg but 15 mg or less.
E: the weight difference was more than 15 mg.

Evaluation C or higher indicates a good result with respect to rupture resistance (the adhesiveness between the substrate and the roughened nickel layer at the time a load is imposed).

A process of measuring a peel strength will be described below. First, a nickel-plated steel sheet (30 mm × 150 mm) was prepared. A polypropylene film (25 mm × 150 mm) having a thickness of 140 µm was thermally fused to the roughened nickel layer by a heat sealer (TP-701-B manufactured by TESTER SANGYO CO,.LTD.), thus obtaining a test piece. The polypropylene film was thermally fused at a temperature of 156°C for a heating time of 5 seconds under a heating pressure of 0.2 MPa. Thereafter, the resin film was pulled by a pulling device (AGS-X 5kN manufactured by SHIMADZU CORPORATION) at a speed of 50 mm/min in a 90° direction from the substrate, acquiring a peel strength that was evaluated as follows.
Good: the peel strength was 20 N/25mm or more.
Poor: the peel strength was less than 20 N/25mm.

### [Evaluation of formation irregularities of the roughened nickel layer]

Formation irregularities of the roughened nickel layer 50 were evaluated on the basis of the result of a surface observation by an SEM. Roughened-plating-free regions (roughened plating deficiencies) in an area of 100 µm × 100 µm were observed in a visual field at a magnification of 1000 times, and evaluated as follows.
A: only roughened plating deficiencies of 4 µm × 4 µm or less or no deficiencies were confirmed.
B: there were roughened plating deficiencies in excess of 4 µm × 4 µm but 10 µm × 10 µm or less.
C: there were roughened plating deficiencies in excess of 10 µm × 10 µm but less than 15 µm × 15 µm.
D: there were roughened plating deficiencies of 15 µm × 15 µm or larger.
C or higher was evaluated as practical (acceptable).

### [Measurement of the lightness L*]

The lightness L* of the surface of the roughened nickel layer was measured using a spectral colorimeter (product name: "CM-5" manufactured by KONICA MINOLTA, INC.) by the SCE process according to geometric conditions in JIS Z8722.

### [Measurement of 85° glossiness]

The 85° glossiness of the surface of the roughened nickel layer was measured using a glossmeter (product name: "VG 7000" manufactured by NIPPON DENSHOKU INDUSTRIES CO., LTD.) according to JIS Z8741.

### [Confirmation as to whether an iron-nickel alloy layer was present or not after heat treatment, a process of measuring a thickness]

For the calculation of the thickness of the iron-nickel alloy layer, an element analysis of Ni and Fe at depths down to 15 µm thicknesswise from the surface layer was performed by way of a linear analysis with SEM-EDX (device names: SU8020 manufactured by Hitachi High-Technologies Corporation and EDAX manufactured by AMETEK, Inc.). Note that measuring conditions included an accelerating voltage: 15 kV, an observation magnification: 5000 times, and a measuring step: 0.1 µm. As illustrated in FIG. 3, the horizontal axis represents the distance (µm) depthwise from the surface layer, and the vertical axis represents X-ray intensities of Ni and Fe. Around the point where the nickel curve and the iron curve cross each other, the thickness of the iron-nickel alloy layer 30 was read from the graph as represented by the distance between points where the X-ray intensity of nickel is 2/10 of its maximum value and the X-ray intensity of iron is 2/10 of its maximum value, respectively. An iron-nickel alloy layer that was confirmed as having a thickness in the range of 0.4 to 6 µm was labeled "Present."

### <Inventive example 1>

First, a cold-rolled foil (thickness of 200 µm) of low-carbon aluminum-killed steel having the chemical composition indicated below was prepared as the substrate 20.

C: 0.04 wt%, Mn: 0.32 wt%, Si: 0.01 wt%, P: 0.012 wt%, S: 0.014 wt%, and remainder: Fe and inevitable impurities.

Then, after the prepared substrate was electrolytically degreased and pickled by immersion in sulfuric acid, both sides of the steel foil were plated with nickel, forming a nickel-plated layer on each side with nickel deposited in an amount of 44.5 g/m². Note that the nickel plating was performed under the following conditions.

### (Conditions for Ni plating)

Bath composition:
Nickel sulfate hexahydrate: 250 g/L
Nickel chloride hexahydrate: 45 g/L
Boric acid: 30 g/L
Bath temperature: 60°C
pH: 4.0 to 5.0
Stirring: air stirring or jet stirring
Current density: 10 A/dm²

Note that the deposited amount of nickel was measured using an X-ray fluorescence device (device name: ZSX100e manufactured by Rigaku Corporation), and the obtained numerical value is indicated in Table 1. The specific measuring process will be omitted from description as it is the same as the process disclosed in PCT Patent Publication No. WO2020/017655. Further, deposited amounts of nickel according to any of inventive examples and comparative examples represent numerical values per one side.

The steel foil having the nickel plated layer formed as described above was subjected to continuous annealing, cold rolling, box-type annealing, and cold rolling in the order named. Specifically, the steel foil was first heat-treated by continuous annealing under the conditions of a heat treatment temperature of 670°C, a soaking time of 40 seconds, and a reducing atmosphere. Next, after the steel foil was cold-rolled for a rolling reduction ranging from 65% to 75%, the steel foil was heat-treated by box-type annealing under the conditions of a heat treatment temperature of 560°C, a soaking time of 6 hours (the total time including temperature increasing, soaking, and cooling times: 80 hours), and a reducing atmosphere. Thereafter, the steel foil was cold-rolled for a rolling reduction ranging from 10% to 20%, whereupon a surface-treated steel foil having an iron-nickel alloy layer on each of both sides thereof was obtained. The surface-treated steel foil had a thickness of 50 µm. The thickness of the iron-nickel alloy layer was 3.1 µm as confirmed by GDS. The deposited amount of nickel in the surface-treated steel foil was 11.1 g/m² as measured by an X-ray fluorescence measuring device.

On the surface of the surface-treated steel foil, a nickel layer (hereinafter referred to as the "foundation nickel layer") to be positioned between the iron-nickel alloy layer and a roughened nickel layer was formed under foundation nickel plating conditions given below, the foundation nickel layer having a thickness of 0.8 µm. Note that, prior to the foundation nickel plating, nickel strike plating was performed to remove an oxide film from the surface of the surface-treated steel foil.

### <Foundation nickel plating conditions>

Bath composition: nickel sulfate hexahydrate 250 g/L, nickel chloride hexahydrate 45 g/L, boric acid 30 g/L
pH 4.0 to 5.0
Bath temperature: 60°C
Current density: 10 A/dm²

Then, a "roughened nickel layer" was formed on the foundation nickel layer on one side under the conditions given below. Note that the roughened nickel layer was formed by way of roughened nickel plating and covering nickel plating as described below.

### <Roughened nickel plating conditions>

The concentration of the nickel sulfate hexahydrate in the plating bath: 10 g/L

The concentration of the nickel chloride hexahydrate in the plating bath: 10 g/L

The concentration of chloride ions in the plating bath: 3 g/L

The ratio of nickel ions to ammonium ions in the plating bath: nickel ions/ammonium ions (weight ratio) = 0.17
pH: 6
Bath temperature: 50°C
Current density: 12 A/dm²
Plating time: 80 seconds

### <Covering nickel plating conditions>

Bath composition: nickel sulfate hexahydrate 250 g/L, nickel chloride hexahydrate 45 g/L, boric acid 30 g/L
pH 4.0 to 5.0
Bath temperature: 60°C
Current density: 5 A/dm²
Plating time: 36 seconds

The total of the deposited amounts of nickel in the iron-nickel alloy layer, the foundation nickel layer, and the roughened nickel layer of the obtained nickel-plated steel sheet was 39.26 g/m², and the total of the deposited amounts of nickel in the iron-nickel alloy layer and the roughened nickel layer, which was calculated by subtracting the deposited amount of nickel in the foundation nickel layer formed by the foundation nickel plating from the above value, was 32.14 g/m². Further, the three-dimensional surface property parameter Sa on the outermost surface of the nickel-plated steel sheet where the roughened nickel layer was formed was measured as 0.88 µm. The arithmetic mean height Sa, the maximum height Sz, and the peak material volume of the scale-limited surface Vmp as three-dimensional surface property parameters were measured using a laser microscope (3D measurement laser microscope LEXT OLS5000 manufactured by Olympus Corporation) with an objective lens 50× magnification of OLS5000. The lightness L* can be measured using a spectral colorimeter by the SCE process according to JIS Z8722. The 85° glossiness was measured using a glossmeter according to JIS Z8741. The adhesiveness and peel strength of the substrate and the roughened nickel layer were also measured. The shape irregularities were determined in terms of the value of Vmp. These measured values together with evaluated formation irregularities are indicated in the Table. An SEM photographic representation of the surface of the obtained nickel-plated steel sheet is illustrated in FIG. 4. A horizontal black line in FIG. 4 indicates a scale bar of 10 µm.

### <Inventive example 2>

The inventive example 2 was conducted similarly to the inventive example 1 except that a foundation nickel layer having a thickness of 0.5 µm was formed between the iron-nickel alloy layer and the roughened nickel layer under the same conditions as those in the inventive example 1. The total of the deposited amounts of nickel in the iron-nickel alloy layer, the foundation nickel layer, and the roughened nickel layer of the obtained nickel-plated steel sheet was 36.6 g/m².

### <Inventive example 3>

The inventive example 3 was conducted similarly to the inventive example 1 except that a foundation nickel layer having a thickness of 0.2 µm was formed between the iron-nickel alloy layer and the roughened nickel layer under the same conditions as those in the inventive example 1. The total of the deposited amounts of nickel in the iron-nickel alloy layer, the foundation nickel layer, and the roughened nickel layer of the obtained nickel-plated steel sheet was 33.9 g/m².

### <Inventive example 4>

The inventive example 4 was conducted similarly to the inventive example 1 except that a foundation nickel layer having a thickness of 0.1 µm was formed between the iron-nickel alloy layer and the roughened nickel layer under the same conditions as those in the inventive example 1. The total of the deposited amounts of nickel in the iron-nickel alloy layer, the foundation nickel layer, and the roughened nickel layer of the obtained nickel-plated steel sheet was 33.0 g/m².

### <Inventive example 5>

The inventive example 5 was conducted similarly to the inventive example 1 except that a foundation nickel layer was not formed. The total of the deposited amounts of nickel in the iron-nickel alloy layer and the roughened nickel layer of the obtained nickel-plated steel sheet was 32.1 g/m².

### <Inventive example 6>

The inventive example 6 was conducted similarly to the inventive example 3 except that a cold-rolled foil as the substrate 20 had a thickness of 60 µm, that the step of obtaining a nickel-plated surface-treated steel sheet with a nickel-plated layer having a thickness of 0.4 µm formed on the substrate 20 included only box-type annealing and cold rolling in the order named, that specific heat treatment conditions of box-type annealing for obtaining an iron-nickel alloy layer included a heat treatment temperature of 560°C, a heat treatment time included a soaking time of 6 hours, with a total time of 80 hours, and that the rolling reduction of cold rolling after the heat treatment of box-type annealing was 17.7%. After the cold rolling, the iron-nickel alloy layer was confirmed by GDS as having a thickens of 1.0 µm. The total of the deposited amounts of nickel in the iron-nickel alloy layer, the foundation nickel layer, and the roughened nickel layer of the obtained nickel-plated steel sheet was 25.8 g/m².

### <Inventive example 7>

The inventive example 7 was conducted similarly to the inventive example 6 except that a foundation nickel layer having a thickness of 0.15 µm was formed under the same conditions as those in the inventive example 1. The total of the deposited amounts of nickel in the iron-nickel alloy layer, the foundation nickel layer, and the roughened nickel layer of the obtained nickel-plated steel sheet was 25.3 g/m².

### <Inventive example 8>

The inventive example 8 was conducted similarly to the inventive example 3 except that the step of forming a roughened nickel layer was performed by way of hoop plating using a plurality of tanks under changed roughened nickel plating conditions given below and that covering nickel plating was then performed by way of hoop plating under changed covering nickel plating conditions given below. The results are indicated in Table 1.

### <Roughened nickel plating conditions>

The concentration of the nickel sulfate hexahydrate in the plating bath: 10 g/L
The concentration of the nickel chloride hexahydrate in the plating bath: 10 g/L
The concentration of chloride ions in the plating bath: 16.2 g/L
The ratio of nickel ions to ammonium ions in the plating bath: nickel ions/ammonium ions (weight ratio) = 0.23
pH: 6
Bath temperature: 50°C
Current density: 10 A/dm²
Plating time: 30 seconds

### <Covering nickel plating conditions>

Bath composition: nickel sulfate hexahydrate 250 g/L, nickel chloride hexahydrate 45 g/L, boric acid 30 g/L
pH 4.0 to 5.0
Bath temperature: 60°C
Current density: 5 A/dm²
Plating time: 6 seconds

The total of the deposited amounts of nickel in the iron-nickel alloy layer, the foundation nickel layer, and the roughened nickel layer of the obtained nickel-plated steel sheet was 23.2 g/m², and the total of the deposited amounts of nickel in the iron-nickel alloy layer and the roughened nickel layer, which was calculated by subtracting the deposited amount of nickel in the foundation nickel layer formed by the foundation nickel plating from the above value, was 21.4 g/m².

### <Inventive example 9>

The inventive example 9 was conducted similarly to the inventive example 8 except that roughened nickel plating conditions were represented by conditions given below. The results are indicated in Table 1.

### <Roughened nickel plating conditions>

The concentration of the nickel sulfate hexahydrate in the plating bath: 10 g/L
The concentration of the nickel chloride hexahydrate in the plating bath: 10 g/L
The concentration of chloride ions in the plating bath: 16.2 g/L
The ratio of nickel ions to ammonium ions in the plating bath: nickel ions/ammonium ions (weight ratio) = 0.23
pH: 6
Bath temperature: 50°C
Current density: 10 A/dm²
Plating time: 50 seconds

### <Covering nickel plating conditions>

Bath composition: nickel sulfate hexahydrate 250 g/L, nickel chloride hexahydrate 45 g/L, boric acid 30 g/L
pH 4.0 to 5.0
Bath temperature: 60°C
Current density: 5 A/dm²
Plating time: 6 seconds

The total of the deposited amounts of nickel in the iron-nickel alloy layer, the foundation nickel layer, and the roughened nickel layer of the obtained nickel-plated steel sheet was 26.5 g/m², and the total of the deposited amounts of nickel in the iron-nickel alloy layer and the roughened nickel layer, which was calculated by subtracting the deposited amount of nickel in the foundation nickel layer formed by the foundation nickel plating from the above value, was 24.7 g/m².

### <Comparative example 1>

The comparative example 1 was conducted similarly to the inventive example 3 except that the steel foil having the nickel plated layer was not annealed. An SEM photographic representation of the surface of the obtained heat-treated steel sheet is illustrated in FIG. 5. Note that a horizontal black line in FIG. 5 indicates a scale bar of 10 µm. The total of the deposited amounts of nickel was 33.9 g/m².

### <Comparative example 2>

The comparative example 2 was conducted similarly to the inventive example 5 except that the steel foil having the nickel plated layer was not annealed. The total of the deposited amounts of nickel was 32.1 g/m².

### <Reference example 1>

The reference example 1 was conducted similarly to the inventive example 1 except that the steel foil having the nickel plated layer was not annealed. The total of the deposited amounts of nickel was 39.3 g/m².

**[Table 1]**

| | Presence /absence of Fe-Ni alloy | Ni layer (µm) | Sa (µm) | Sz (µm) | L* | Vmp (µm³/µm²) | Glossiness 85° | Roughened Ni layer adhesiveness | Resin adhesiveness | Roughened Ni layer | |
|---|---|---|---|---|---|---|---|---|---|---|---|
| | | | | | | | | | Peel strength | Formation irregularities | Shape irregularities |
| Inventive example 1 | Present | 0.8 | 0.882 | 15.735 | 40.33 | 0.066 | 5.5 | A | Good | A | A |
| Inventive example 2 | Present | 0.5 | 0.895 | 10.275 | 38.43 | 0.060 | 6.5 | A | Good | B | A |
| Inventive example 3 | Present | 0.2 | 0.842 | 11.425 | 41.06 | 0.066 | 6.5 | A | Good | B | A |
| Inventive example 4 | Present | 0.1 | 0.968 | 17.877 | 39.99 | 0.081 | 4.0 | C | Good | C | C |
| Inventive example 5 | Present | 0.0 | 1.017 | 11.188 | 41.47 | 0.082 | 2.6 | C | Good | C | C |
| Inventive example 6 | Present | 0.2 | 0.811 | 13.739 | 40.00 | 0.070 | 2.2 | A | Good | B | A |
| Inventive example 7 | Present | 0.15 | 0.844 | 11.370 | 40.80 | 0.070 | 5.7 | B | Good | B | A |
| Inventive example 8 | Present | 0.2 | 0.268 | 5.1 | 46.55 | 0.013 | 52.4 | A | Good | A | A |
| Inventive example 9 | Present | 0.2 | 0.36 | 8.6 | 41.29 | 0.030 | 28.0 | A | Good | A | A |
| Comparative example 1 | Absent | 0.2 | 1.197 | 14.181 | 36.24 | 0.103 | 3.0 | E | Good | D | E |
| Comparative example 2 | Absent | 0.0 | 1.295 | 19.615 | 37.81 | 0.121 | 1.4 | E | Good | D | E |
| Reference example 1 | Absent | 0.8 | 0.842 | 12.822 | 38.40 | 0.059 | 14.7 | C | Good | B | A |

With regard to the inventive examples 1 through 9, the formation irregularities and the shape irregularities due to the roughened plating could be reduced by having the iron-nickel alloy layer between the substrate and the roughened nickel layer. With regard to the comparative example 1 and the comparative example 2, by contrast, as they had no iron-nickel alloy layer, shape irregularities and shape irregularities could not be prevented from occurring in a case where the substrate Ni layer was reduced.

More specifically, in the absence of foundation nickel plating, the inventive example 5 having the iron-nickel alloy layer between the substrate and the roughened nickel layer was not only able to prevent formation irregularities and shape irregularities from occurring, but also had practically feasible rupture resistance, in contrast to the comparative example 2 that was free of the iron-nickel alloy layer. Further, in contrast to the comparative example 1, the inventive examples 2 through 4 and 6 through 9 having the foundation nickel-plated layers of essentially the same thickness prevented formation irregularities and shape irregularities from occurring and had practically feasible rupture resistance.

According to the inventive examples 1 through 9 described above, it was thus possible to obtain the nickel-plated steel sheets where both the adhesiveness of the plated layer to the substrate and the adhesiveness of the plated layer to another member are ensured and that had a reduced total thickness including the roughened layer.

Moreover, a comparison between the inventive examples 1 through 3 and 6 through 9 and the reference example 1 revealed that the inventive examples 1 through 3 and 6 through 9 where the iron-nickel alloy layer was formed and the foundation nickel layer was plated to a thickness of 0.15 µm was as advantageous as or more advantageous than the reference example 1 where the iron-nickel alloy layer was not formed and the foundation nickel layer was plated to a thickness of 0.8 µm. Specifically, the inventive examples 1 through 3 and 6 through 9 had formation irregularities and shape irregularities equal to or more than the reference example 1 and, in addition, were capable of distinctively increasing rupture resistance.

Note that various changes and modifications may be made in the embodiments and the inventive examples described above without departing from the scope of the present invention.

Further, the nickel-plated steel sheets according to the embodiments and the inventive examples are described as mainly applicable to a current collector for a secondary battery. However, they are not limited to such an application, and may also appropriately be used in small-size electronic devices.

### [Industrial Applicability]

As described above, the nickel-plated steel sheet according to the present invention is applicable to current collectors for various types of batteries.

### [Reference Signs List]

- 10:: Nickel-plated steel sheet
- 20:: Substrate
- 30:: Iron-nickel alloy layer
- 40:: Nickel layer
- 50:: Roughened nickel layer

## Claims

1. A nickel-plated steel sheet comprising:
a substrate made of a steel sheet;
a roughened nickel layer provided on the substrate; and
an iron-nickel alloy layer provided between the substrate and the roughened nickel layer.

2. The nickel-plated steel sheet according to claim 1,
wherein an arithmetic mean height Sa as a three-dimensional surface property parameter of a surface of the roughened nickel layer is in a range of 0.2 to 1.3 µm, and a lightness L* thereof is in a range of 30 to 50.

3. The nickel-plated steel sheet according to claim 1 or 2, further comprising:
a nickel layer provided between the roughened nickel layer and the iron-nickel alloy layer.

4. The nickel-plated steel sheet according to claim 3,
wherein a deposited amount of nickel in the nickel layer is in a range of 0.08 to 8.90 g/m².

5. The nickel-plated steel sheet according to claim 3,
wherein a total of deposited amounts of nickel in the iron-nickel alloy layer and the nickel layer is in a range of 0.89 to 26.7 g/m².

6. The nickel-plated steel sheet according to claim 3,
wherein a total of deposited amounts of nickel in the roughened nickel layer, the iron-nickel alloy layer, and the nickel layer is in a range of 4.0 to 88.2 g/m².

7. The nickel-plated steel sheet according to claim 3,
wherein a peak material volume of the scale-limited surface Vmp as a three-dimensional surface property parameter of a surface of the roughened nickel layer is 0.09 µm³/µm² or less.

8. A method of manufacturing a nickel-plated steel sheet, the method comprising:
an iron-nickel alloy layer forming step of forming an iron-nickel alloy layer on a substrate made of a steel sheet; and
a roughened nickel plating step of forming a roughened nickel layer on the formed iron-nickel alloy layer by performing roughened nickel plating thereon.

9. The method of manufacturing a nickel-plated steel sheet according to claim 8,
wherein the iron-nickel alloy layer forming step includes
a nickel layer forming step of forming a nickel layer on the substrate made of the steel sheet, by performing nickel plating thereon, and
a heat treatment step of performing heat treatment on the substrate with the nickel layer formed thereon.

10. The method of manufacturing a nickel-plated steel sheet according to claim 8 or **9,** further comprising:
before the roughened nickel plating step, a foundation nickel depositing step of depositing foundation nickel in an amount ranging from 0.08 to 8.90 g/m² by performing nickel strike plating and nickel plating.

11. The method of manufacturing a nickel-plated steel sheet according to claim 8 or 9,
wherein a proportion of iron in a surface to be roughened prior to the roughened nickel plating step is in a range of 0% to 65%.
